(19) Europäisches Patentamt

European Patent Office

Office européen des brevets

(11) **EP 1 406 141 B1**

(12) **FASCICULE DE BREVET EUROPEEN**

(45) Date de publication et mention
de la délivrance du brevet:
**12.04.2006  Bulletin 2006/15**

(51) Int Cl.:
*G05D 1/06* (2006.01)    *F02C 9/28* (2006.01)
*B64D 31/08* (2006.01)

(21) Numéro de dépôt: **03292284.1**

(22) Date de dépôt: **16.09.2003**

(54) **Procédé et dispositif pour commander automatiquement la poussée d'un moteur d'un aéronef**

Verfahren und Einrichtung zur automatischen Steuerung des Schubes eines Flugzeugantriebes

Process and device to automatically control the thrust of an aircraft engine

(84) Etats contractants désignés:
**AT BE BG CH CY CZ DE DK EE ES FI FR GB GR
HU IE IT LI LU MC NL PT RO SE SI SK TR**

(30) Priorité: **02.10.2002  FR 0212174**

(43) Date de publication de la demande:
**07.04.2004  Bulletin 2004/15**

(73) Titulaire: **AIRBUS France
31060 Toulouse (FR)**

(72) Inventeurs:
• **Muller, Jean
31170 Tournefeuille (FR)**
• **Graves, Didier
31820 Pibrac (FR)**

(74) Mandataire: **Hauer, Bernard
Cabinet Bonnétat
29, Rue de Saint-Pétersbourg
75008 Paris (FR)**

(56) Documents cités:
**EP-A- 0 482 250        US-A- 4 422 147
US-A- 4 569 021**

## EP 1 406 141 B1

**Description**

La présente invention concerne un procédé et un dispositif pour commander automatiquement la poussée d'au moins un moteur d'un aéronef lors d'une phase de vol horizontal à vitesse stabilisée, en particulier lors d'une phase de vol en croisière d'un avion de transport.

Plus précisément, elle s'applique au cas où la poussée du ou des moteurs est commandée de façon automatique par un système usuel d'autopoussée ("autothrust" en anglais).

On sait que, dans ce cas, le système d'autopoussée régule automatiquement le régime des moteurs, de façon continue, en fonction de l'écart entre la vitesse mesurée de l'aéronef et la vitesse de consigne. Un tel système d'autopoussée permet donc d'engendrer une vitesse stabilisée (sur la vitesse de consigne) de l'aéronef.

EP-0482250-A1 décrit un système de contrôle de vitesse pour un moteur à réaction d'un aéronef.

Toutefois, en raison de la génération d'une variation continue (ou permanente) du régime du ou des moteurs, qui est à l'origine d'une variation permanente des fréquences sonores émises par les moteurs (les fréquences sonores variant bien entendu avec le régime des moteurs), ce système d'autopoussée présente donc l'inconvénient de faire varier de façon permanente le bruit émis par le ou les moteurs, ce qui réduit le confort acoustique, en particulier des passagers de l'aéronef. Or, sur un avion de transport notamment, le confort des passagers est essentiel durant une phase de vol horizontal à vitesse stabilisée telle qu'une phase de croisière, qui peut durer plusieurs heures.

La présente invention a pour objet de remédier à ces inconvénients. Elle concerne un procédé pour commander automatiquement la poussée d'au moins un moteur d'un aéronef lors d'une phase de vol horizontal à vitesse stabilisée, procédé qui permet d'améliorer le confort acoustique des passagers de l'aéronef.

A cet effet, selon l'invention, ledit procédé selon lequel on commande automatiquement la poussée du moteur en lui appliquant une valeur de commande qui correspond à la valeur d'un paramètre de commande prédéterminé et représentatif du régime dudit moteur, et selon lequel on réalise, automatiquement et de façon répétitive, la suite d'étapes suivante :

    a) on mesure une vitesse effective correspondant à la valeur effective de la vitesse de l'aéronef ;
    b) on détermine une vitesse de consigne correspondant à la vitesse de l'aéronef représentative de la valeur de commande obtenue à partir de la suite d'étapes précédente ;
    c) on calcule une première différence entre ladite vitesse effective et ladite vitesse de consigne ;
    d) on détermine, pour ledit paramètre de commande, un terme intermédiaire dépendant de ladite première différence, ledit terme intermédiaire permettant d'obtenir un terme correcteur ;
    e) on fait la somme dudit terme correcteur et d'un terme d'équilibre qui engendre un régime d'équilibre du moteur en l'absence de perturbations de manière à obtenir ladite valeur de commande ; et
    f) on applique la valeur de commande ainsi obtenue audit moteur, est remarquable en ce qu'à l'étape d) :

    -   on calcule une seconde différence entre ledit terme intermédiaire de la présente suite d'étapes et le terme correcteur de la suite d'étapes précédente ;
    -   on compare cette seconde différence à une valeur de seuil prédéterminée ; et
    -   on sélectionne comme terme correcteur pour la présente suite d'étapes, que l'on utilise notamment à ladite étape e) :

        . ledit terme intermédiaire de la présente suite d'étapes, si ladite seconde différence est supérieure à ladite valeur de seuil ; et
        . ledit terme correcteur de la suite d'étapes précédente, si ladite seconde différence est inférieure ou égale à ladite valeur de seuil.

Ainsi, tant que la seconde différence est inférieure ou égale à la valeur de seuil, on garde le même terme correcteur de sorte que la valeur de commande n'est pas modifiée (le terme d'équilibre relativement stable étant uniquement modifié lorsqu'il convient de faire varier le régime d'équilibre, c'est-à-dire généralement la vitesse de consigne). La valeur de commande (et ainsi la commande du régime ou de la poussée) est donc uniquement modifiée, lorsque ladite seconde différence (qui dépend de ladite première différence) dépasse ladite valeur de seuil, c'est-à-dire lorsque cela est nécessaire à l'asservissement de la vitesse compte tenu des écarts (première différence) entre la vitesse effective et la vitesse de consigne de l'aéronef. Par conséquent, grâce à la présente invention, le régime du moteur n'est pas régulé de façon continue (ou permanente), mais il est régulé de façon discrète. Il en résulte une amélioration très sensible du confort acoustique des passagers de l'aéronef, puisque les fréquences sonores des bruits émis par les moteurs ne sont plus modifiées en permanence.

De façon avantageuse, on filtre ledit terme correcteur sélectionné, avant de l'utiliser à l'étape e), ce qui permet de rendre moins brutale le cas échéant une modification du régime du moteur et donc d'améliorer davantage encore le confort acoustique des passagers.

Dans le cadre de la présente invention, ledit paramètre de commande prédéterminé est la vitesse de rotation N1 du moteur ou le rapport de pressions moteur EPR ("Engine Pressure Ration" en anglais) dudit moteur.

Dans le premier cas (paramètre de commande : vitesse de rotation N1), ladite valeur de seuil est avantageusement égale à 0,5% de la valeur de consigne de la vitesse de rotation du moteur. Cette valeur de seuil, ainsi que la constante de temps du filtre pour filtrer le terme correcteur, peuvent être déterminées de façon empirique, notamment à l'aide d'études physiologiques effectuées sur des passagers de l'aéronef.

De plus, dans ledit premier cas, avantageusement, à l'étape d), on détermine ledit terme intermédiaire en faisant la somme :

- d'un premier terme qui est proportionnel à ladite première différence ; et
- d'un second terme qui :

    . correspond à l'intégration de ladite première différence si les conditions $\alpha$ et $\beta$ suivantes sont vérifiées :

        $\alpha$) ladite première différence est supérieure à une valeur prédéterminée ; et
        $\beta$) ladite vitesse effective ne diverge pas de ladite vitesse de consigne ; et

    . est égal à zéro, si au moins l'une des conditions $\alpha$ et $\beta$ précédentes n'est pas vérifiée.

La présente invention concerne également une méthode de commande de la poussée d'au moins un moteur d'un aéronef lors d'une phase de vol horizontal à vitesse stabilisée, ladite méthode comportant au moins un premier procédé de commande de la poussée de type usuel.

Selon l'invention, ladite méthode est remarquable en ce qu'elle comporte de plus un second procédé de commande de la poussée, en ce que ledit second procédé de commande correspond au procédé spécifié ci-dessus, en ce que l'on prend en compte les résultats dudit premier procédé de commande en fonctionnement normal, et en ce que l'on commute automatiquement dans ledit second procédé de commande pour prendre en compte les résultats de ce dernier lorsqu'au moins l'une d'une pluralité de conditions prédéterminées est vérifiée.

Avantageusement, lesdites conditions prédéterminées comprennent au moins les conditions suivantes :

- la vitesse effective de l'aéronef est stabilisée, en étant à une valeur prédéterminée près, égale à la vitesse de consigne ;
- les conditions de calcul dudit terme d'équilibre sont valides ;
- une fonction d'autopoussée de l'aéronef est enclenchée en mode de maintien de vitesse ; et
- un pilote automatique de l'aéronef est actif en mode de maintien d'altitude.

La présente invention concerne également un dispositif pour commander automatiquement la poussée d'au moins un moteur d'un aéronef, lors d'une phase de vol horizontal à vitesse stabilisée.

Selon l'invention, ledit dispositif du type comportant :

- des moyens pour mesurer une vitesse effective correspondant à la valeur effective de la vitesse de l'aéronef ;
- des moyens pour déterminer une vitesse de consigne correspondant à la vitesse de l'aéronef représentative d'une valeur de commande ;
- des moyens pour calculer une première différence entre ladite vitesse effective et ladite vitesse de consigne ;
- des moyens pour déterminer, pour un paramètre de commande, un terme intermédiaire dépendant de ladite première différence, ledit terme intermédiaire permettant d'obtenir un terme correcteur ;
- des moyens pour faire la somme dudit terme correcteur et d'un terme d'équilibre qui engendre un régime d'équilibre du moteur en l'absence de perturbations de manière à obtenir une valeur de commande ; et
- des moyens pour appliquer la valeur de commande ainsi obtenue audit moteur,

est remarquable en ce qu'il comporte de plus :

- des moyens pour calculer une seconde différence entre ledit terme intermédiaire et un terme correcteur enregistré précédemment ;
- des moyens pour comparer cette seconde différence à une valeur de seuil prédéterminée ;
- des moyens pour sélectionner comme terme correcteur :

    . ledit terme intermédiaire, si ladite seconde différence est supérieure à ladite valeur de seuil ; et

. ledit terme correcteur enregistré précédemment, si ladite seconde différence est inférieure ou égale à ladite valeur de seuil ; et

- des moyens pour enregistrer le terme correcteur sélectionné.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 montre schématiquement un premier mode de réalisation d'une unité de calcul d'un dispositif conforme à l'invention.

La figure 3 montre schématiquement un second mode de réalisation d'une unité de calcul d'un dispositif conforme à l'invention.

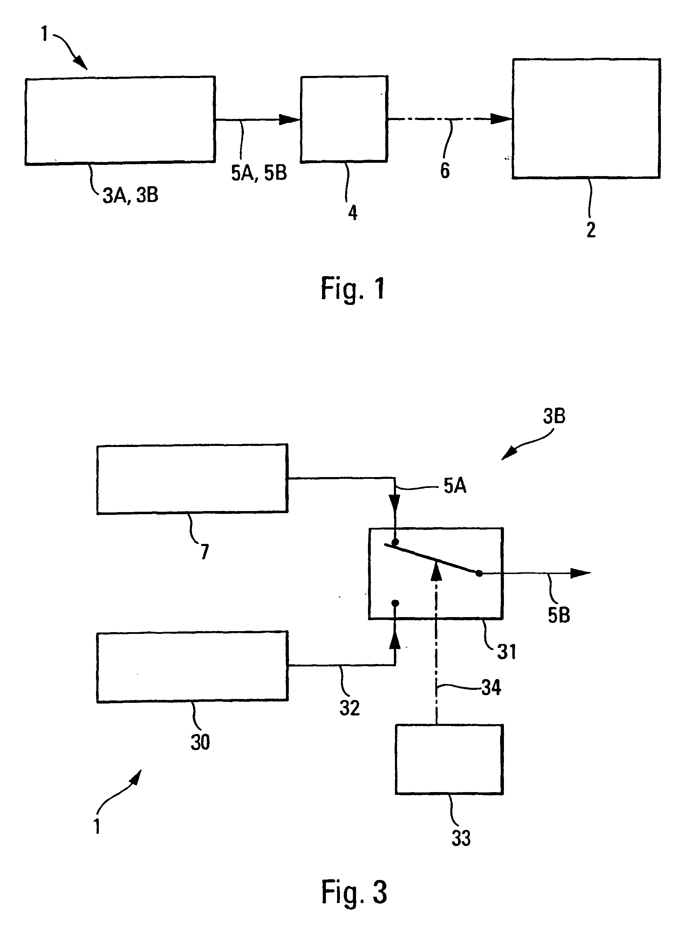

Le dispositif 1 conforme à l'invention et représenté schématiquement sur la figure 1 est un dispositif d'autopoussée et est destiné à commander automatiquement la poussée d'au moins un moteur 2 d'un aéronef, en particulier d'un avion de transport, lors d'une phase de vol horizontal à vitesse stabilisée, en particulier lors d'une phase de vol en croisière pour un avion de transport.

Ce dispositif 1 comporte :

- une unité de calcul 3A, 3B pour déterminer automatiquement une valeur de commande du régime du ou des moteurs 2 de l'aéronef ; et
- des moyens usuels 4 de régulation du moteur, qui sont reliés par une liaison 5A, 5B à l'unité de calcul 3A, 3B, et qui appliquent automatiquement audit moteur 2 les valeurs de commande déterminées par ladite unité de calcul 3A, 3B, comme illustré schématiquement par une liaison en traits mixtes 6 sur la figure 1.

On sait que, selon le fabricant de moteurs, la commande du régime d'un moteur 2 est exprimée :

- soit sous la forme d'un paramètre (de commande) N1 qui représente la vitesse de rotation du moteur 2 ;
- soit sous la forme d'un paramètre (de commande) EPR ("Engine Pressure Ratio" en anglais) qui représente le rapport de pressions moteur dudit moteur 2.

Ces deux paramètres N1 et EPR, lorsqu'ils sont utilisés comme valeur de commande du moteur 2, permettent de faire varier sa poussée. Il n'existe donc aucune différence fondamentale entre ces paramètres N1 et EPR lorsque l'on considère la commande de la poussée du moteur 2. Par conséquent, la solution conforme à l'invention et présentée ci-après sur la base du paramètre N1 s'applique également au paramètre EPR.

Toutefois, selon l'invention, de façon générale, quel que soit le paramètre N1 ou EPR considéré, le dispositif 1 réalise de façon automatique et répétitive la suite d'étapes a) à f) suivante :

a) il mesure une vitesse effective Vc correspondant à la valeur effective de la vitesse de l'aéronef ;

b) il détermine une vitesse de consigne Vctgt correspondant à la vitesse de l'aéronef, représentative de la valeur de commande obtenue à partir de la suite d'étapes a) à f) précédente [c'est-à-dire réalisée précédemment (antérieurement) par rapport à la présente suite d'étapes] ;

c) il calcule une première différence entre ladite vitesse effective Vc et ladite vitesse de consigne Vctgt ;

d) il détermine, pour ledit paramètre de commande N1 ou EPR considéré, un terme intermédiaire dépendant de ladite première différence, ledit terme intermédiaire permettant d'obtenir un terme correcteur ;

e) il fait la somme dudit terme correcteur et d'un terme d'équilibre qui engendre un régime d'équilibre du moteur 2 en l'absence de perturbations de manière à obtenir ladite valeur de commande, lesdites étapes a) à e) étant mises en oeuvre par l'unité de calcul 3A, 3B ; et

f) il applique, à l'aide des moyens 4, la valeur de commande ainsi obtenue audit moteur 2.

Selon l'invention, à ladite étape d), ledit dispositif 1 :

- calcule une seconde différence entre ledit terme intermédiaire de la présente suite d'étapes et le terme correcteur de la suite d'étapes précédente ;
- compare cette seconde différence à une valeur de seuil S prédéterminée ; et
- sélectionne comme terme correcteur pour la présente suite d'étapes, qu'il utilise notamment à ladite étape e) :

. ledit terme intermédiaire de la présente suite d'étapes, si ladite seconde différence est supérieure à ladite valeur de seuil S ; et

**4**

. ledit terme correcteur de la suite d'étapes précédente, si ladite seconde différence est inférieure ou égale à ladite valeur de seuil S.

Ainsi, tant que la seconde différence est inférieure ou égale à la valeur de seuil S, on garde le même terme correcteur de sorte que la valeur de commande n'est pas modifiée (le terme d'équilibre relativement stable étant uniquement modifié lorsqu'il convient de faire varier le régime d'équilibre, c'est-à-dire généralement la vitesse de consigne). La valeur de commande (et ainsi la commande du régime ou de la poussée) est donc uniquement modifiée, lorsque ladite seconde différence (qui dépend de ladite première différence) dépasse ladite valeur de seuil S, c'est-à-dire lorsque cela est nécessaire à l'asservissement de la vitesse compte tenu des écarts (première différence) entre la vitesse effective Vc et la vitesse de consigne Vctgt de l'aéronef. Par conséquent, grâce à la présente invention, le régime du ou des moteurs 2 n'est pas régulé de façon continue (ou permanente), mais il est régulé de façon discrète. Il en résulte une amélioration très sensible du confort acoustique des passagers de l'aéronef, puisque les fréquences sonores des bruits émis par le ou les moteurs 2 ne sont plus modifiées en permanence.

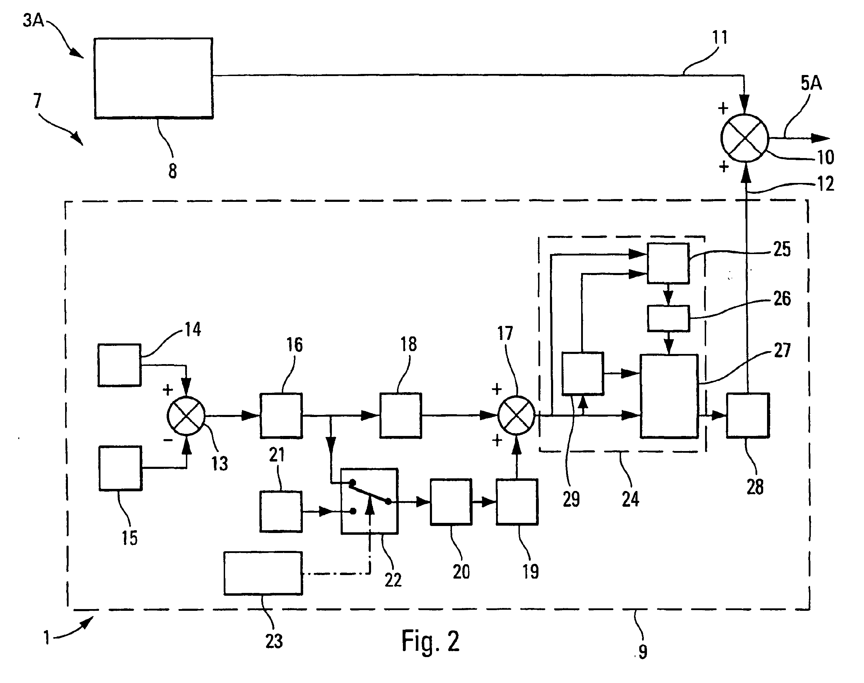

Dans un premier mode de réalisation représenté sur la figure 2, l'unité de calcul 3A comporte un ensemble de calcul 7 comprenant :

- une première unité 8 pour déterminer de façon usuelle, comme précisé ci-dessous, un terme d'équilibre N1eq (consigne d'équilibre) qui correspond au régime moteur d'équilibre, en l'absence de perturbation des conditions de vol ;
- une seconde unité 9 pour déterminer un terme correcteur $\Delta N1f$, comme précisé ci-dessous ; et
- un sommateur 10 qui est relié par des liaisons 11 et 12 respectivement auxdites première et seconde unités 8 et 9 et qui fait la somme dudit terme d'équilibre N1eq et dudit terme correcteur $\Delta N1f$ de manière à obtenir une valeur de commande N1tgt qui est transmise aux moyens 4 par la liaison 5A (moyens 4 qui appliquent donc cette valeur de commande N1tgt au moteur 2).

Comme on peut le voir sur la figure 2, la seconde unité 9 comprend un moyen de calcul 13 qui calcule la différence $\Delta Vc$ entre :

- la vitesse de consigne Vctgt de l'aéronef, qui est reçue d'un moyen usuel 14 ; et
- la vitesse effective Vc de l'aéronef qui est mesurée par un capteur usuel 15, et qui est éventuellement filtrée.

Ladite différence $\Delta Vc$ issu du moyen de calcul 13 est transmise à un moyen de calcul 16, qui la filtre, par exemple avec une constante de temps de cinq secondes, de manière à obtenir une différence filtrée DVc.

Ladite seconde unité,9 comporte, de plus, un sommateur 17 qui calcule un terme intermédiaire $\Delta N1$ en faisant la somme :

- d'un premier terme calculé par un moyen de calcul 18 qui, à cet effet, multiplie ladite différence filtrée DVc par un coefficient KF prédéterminé ; et
- d'un second terme qui :

    . correspond à l'intégration (par un moyen de calcul 19) du produit (réalisé par un moyen de calcul 20) de ladite différence DVc et d'un gain prédéterminé, lorsque des conditions particulières précisées ci-dessous relatives à la vitesse Vc sont remplies ; ou
    . est égal à zéro (la valeur "zéro" étant issue d'une mémoire 21), lorsque ces conditions particulières ne sont pas remplies.

Selon l'invention, ces conditions particulières correspondent aux conditions suivantes :

- la différence DVc est supérieure à une valeur prédéterminée, par exemple 0,5 noeuds : et
- la vitesse effective Vc ne diverge pas de la vitesse de consigne Vcgt.

Pour ce faire, un commutateur 22 qui est commandé par un moyen de commande 23 comportant lesdites conditions particulières, est monté entre, d'une part, les sorties du moyen de calcul 16 et de la mémoire 21 et, d'autre part, l'entrée du moyen de calcul 20.

Selon l'invention, ladite seconde unité 9 comporte, de plus, un sous-système 24 qui comprend :

- un moyen de calcul 25 pour calculer une seconde différence $\Delta 2$ entre ledit terme intermédiaire $\Delta N1$ et un terme correcteur $\Delta N1mem$ enregistré précédemment ;

-   un comparateur 26 pour comparer cette seconde différence Δ2 à une valeur de seuil S prédéterminée ;
-   un moyen de sélection 27 pour sélectionner comme terme correcteur ΔN1f :

    . ledit terme intermédiaire ΔN1, si ladite seconde différence Δ2 est supérieure à ladite valeur de seuil S ; et
    . ledit terme correcteur ΔN1mem enregistré précédemment, si ladite seconde différence Δ2 est inférieure ou égale à ladite valeur de seuil S,

    lesdits moyens de sélection 27 transmettant le terme correcteur ΔN1f ainsi sélectionné au sommateur 10, de préférence après filtrage par un moyen de filtrage 28 ; et
-   une mémoire 29 pour enregistrer le terme correcteur sélectionné, dont la valeur sera utilisée ultérieurement par le comparateur 25.

Ces caractéristiques permettent, avantageusement, de maintenir ΔN1mem stable tant que sa valeur reste proche (écart inférieur à la valeur de seuil S) de la valeur ΔN1 qui permettrait de réaliser l'asservissement de la vitesse Vc sur la consigne Vctgt. Ainsi, le régime du ou des moteurs 2 n'est pas modifié de façon continue, mais seulement lorsque cela est nécessaire à l'asservissement de la vitesse compte tenu des écarts admis entre celle-ci et sa consigne. Il en résulte une amélioration du confort acoustique des passagers.

Selon un mode de réalisation préféré de l'invention, la valeur de seuil S est sensiblement égale à 0,5% de la valeur de consigne N1cons de la vitesse de rotation N1 du moteur 2. Cette valeur N1cons est déterminée de façon empirique, en particulier à l'aide d'études physiologiques effectuées sur des passagers.

Selon un autre mode de réalisation préféré de l'invention, le moyen de filtrage 28 qui présente une constante de temps τ est destiné à adoucir les variations du régime moteur lors d'évolutions en palier de ΔN1mem, ce qui améliore également le confort acoustique des passagers. De façon préférentielle, la constante de temps τ est égale à cinq secondes. Cette valeur est également déterminée de façon empirique au moyen d'études physiologiques effectuées sur des passagers.

On notera par ailleurs que le terme d'équilibre N1eq peut être calculé de façon usuelle à partir de lois connues qui sont intégrées dans la première unité 8.

A titre d'illustration, ce terme d'équilibre N1eq peut être calculé à partir des équations suivantes :

$$N1eq = N1R * \sqrt{Tt / 288,15}$$

avec

$$\begin{cases} N1R = f_1 \, (FNR, M) \\ FNR = Fn * 101325 / Pt \\ Fn = m * g * (\sin \gamma + (Cx / Cz) * \cos \gamma) \end{cases}$$

et

$$\begin{cases} Cx = f(Cz^2, M) \\ Cz = (m * g * \cos \gamma) / (0.7 * Ps * Sr * M^2) \end{cases}$$

dans lesquelles on utilise les paramètres suivants :

-   Fn : la poussée du moteur 2 (N) ;
-   m : la masse de l'aéronef (kg) ;
-   g : l'accélération de la pesanteur (≈ 9,81 m/s²) ;
-   γ : la pente de l'aéronef (rd) ;
-   M : le nombre de Mach ;
-   Ps : la pression statique (Pa) ;

- Sr : une surface de référence (m$^2$) ;
- Cx : le coefficient de traînée ;
- Cz : le coefficient de portance ;
- Tt : la température totale (degrés Kelvin) ; et
- Pt : la pression totale (Pa).

On notera en outre que, dans le cas du paramètre EPR, il n'existe pas de valeur réduite telle que la valeur N1R. On calcule donc directement, de façon connue, le terme d'équilibre EPReq en fonction de FNR et de M : EPReq = f$_2$ (FNR, M).

Dans un autre mode de réalisation 3B représenté sur la figure 3 et correspondant à une application du mode de réalisation 3A, le dispositif 1 comporte, en plus de l'ensemble de calcul 7 décrit précédemment :

- un ensemble de calcul 30 qui met en oeuvre un procédé usuel de commande de la poussée, tel qu'il en existe un sur un système connu d'autopoussée ;
- un moyen de commutation 31, dont l'entrée est reliée aux sorties (par des liaisons 5A et 32) desdits ensembles de calcul 7 et 30, et qui permet de commuter entre lesdits deux ensembles de calcul 7 et 32 pour transmettre à sa sortie (par la liaison 5B qui est reliée aux moyens 4 de la figure 1) soit la valeur fournie par l'ensemble de calcul 7, soit la valeur fournie par l'ensemble de calcul 30 ; et
- une unité de commande 33 qui commande automatiquement ledit commutateur 31, comme illustré par une liaison en traits mixtes 34, en fonction de conditions prédéterminées.

Selon l'invention, le dispositif 1 prend en compte les résultats dudit procédé de commande usuel (mis en oeuvre par l'ensemble de calcul 30) en fonctionnement normal, et il commute automatiquement dans ledit procédé de commande conforme à l'invention (ensemble de calcul 7) pour prendre en compte les résultats de ce dernier lorsqu'au moins l'une d'une pluralité de conditions prédéterminées est vérifiée.

Dans un mode de réalisation préféré, lesdites conditions prédéterminées comprennent au moins les conditions suivantes :

- la vitesse effective Vc est stabilisée, en étant à une valeur prédéterminée près, égale à la vitesse de consigne Vctgt ;
- les conditions de calcul dudit terme d'équilibre N1eq sont valides ;
- une fonction d'autopoussée de l'aéronef est enclenchée en mode de maintien de vitesse ; et
- un pilote automatique de l'aéronef est actif en mode de maintien d'altitude.

**Revendications**

1.  Procédé de commande automatique de la poussée d'au moins un moteur (2) d'un aéronef lors d'une phase de vol horizontal à vitesse stabilisée, procédé selon lequel on commande la poussée du moteur (2) en lui appliquant une valeur de commande qui correspond à la valeur d'un paramètre de commande prédéterminé et représentatif du régime dudit moteur (2), et selon lequel on réalise, automatiquement et de façon répétitive, la suite d'étapes suivante :

    a) on mesure une vitesse effective correspondant à la valeur effective de la vitesse de l'aéronef ;
    b) on détermine une vitesse de consigne correspondant à la vitesse de l'aéronef, représentative de la valeur de commande obtenue à partir de la suite d'étapes précédente ;
    c) on calcule une première différence entre ladite vitesse effective et ladite vitesse de consigne ;
    d) on détermine, pour ledit paramètre de commande, un terme intermédiaire dépendant de ladite première différence, ledit terme intermédiaire permettant d'obtenir un terme correcteur ;
    e) on fait la somme dudit terme correcteur et d'un terme d'équilibre qui engendre un régime d'équilibre du moteur (2) en l'absence de perturbations de manière à obtenir ladite valeur de commande ; et
    f) on applique la valeur de commande ainsi obtenue audit moteur,

    **caractérisé en ce qu'**à l'étape d) :

    - on calcule une seconde différence entre ledit terme intermédiaire de la présente suite d'étapes et le terme correcteur de la suite d'étapes précédente ;
    - on compare cette seconde différence à une valeur de seuil prédéterminée ; et
    - on sélectionne comme terme correcteur pour la présente suite d'étapes, que l'on utilise notamment à ladite étape e) :

. ledit terme intermédiaire de la présente suite d'étapes, si ladite seconde différence est supérieure à ladite valeur de seuil ; et

. ledit terme correcteur de la suite d'étapes précédente, si ladite seconde différence est inférieure ou égale à ladite valeur de seuil.

**2.** Procédé selon la revendication 1,
**caractérisé en ce que** l'on filtre ledit terme correcteur sélectionné, avant de l'utiliser à l'étape e).

**3.** Procédé selon l'une des revendications 1 et 2,
**caractérisé en ce que** ledit paramètre de commande prédéterminé est la vitesse de rotation du moteur (2).

**4.** Procédé selon la revendication 3,
**caractérisé en ce que** ladite valeur de seuil est égale à 0,5% de la valeur de consigne de la vitesse de rotation du moteur (2).

**5.** Procédé selon l'une quelconque des revendications 3 et 4,
**caractérisé en ce qu'**à l'étape d), on détermine ledit terme intermédiaire en faisant la somme :

- d'un premier terme qui est proportionnel à ladite première différence ; et
- d'un second terme qui :

. correspond à l'intégration de ladite première différence, si ladite première différence est supérieure à une valeur prédéterminée et si ladite vitesse effective ne diverge pas de ladite vitesse de consigne ; et
. est égal à zéro, si au moins l'une des conditions précédentes n'est pas vérifiée.

**6.** Procédé selon l'une des revendications 1 et 2,
**caractérisé en ce que** ledit paramètre de commande prédéterminé est le rapport de pressions moteur dudit moteur (2).

**7.** Méthode de commande de la poussée d'au moins un moteur (2) d'un aéronef lors d'une phase de vol horizontal à vitesse stabilisée, ladite méthode comportant au moins un premier procédé de commande de la poussée,
**caractérisée en ce qu'**elle comporte de plus un second procédé de commande de la poussée, **en ce que** ledit second procédé de commande correspond au procédé spécifié sous l'une quelconque des revendications 1 à 6, **en ce que** l'on prend en compte les résultats dudit premier procédé de commande en fonctionnement normal, et **en ce que** l'on commute automatiquement dans ledit second procédé de commande pour prendre en compte les résultats de ce dernier lorsqu'au moins l'une d'une pluralité de conditions prédéterminées est vérifiée.

**8.** Méthode selon la revendication 7,
**caractérisée en ce que** lesdites conditions prédéterminées comprennent au moins les conditions suivantes :

- la vitesse effective est stabilisée, en étant à une valeur prédéterminée près, égale à la vitesse de consigne ;
- les conditions de calcul dudit terme d'équilibre sont valides ;
- une fonction d'autopoussée de l'aéronef est enclenchée en mode de maintien de vitesse ; et
- un pilote automatique de l'aéronef est actif en mode de maintien d'altitude.

**9.** Dispositif pour commander la poussée d'au moins un moteur (2) d'un aéronef lors d'une phase de vol horizontal à vitesse stabilisée, ledit dispositif (1) comportant :

- des moyens (15) pour mesurer une vitesse effective correspondant à la valeur effective de la vitesse de l'aéronef ;
- des moyens (14) pour déterminer une vitesse de consigne correspondant à la vitesse de l'aéronef représentative d'une valeur de commande ;
- des moyens (13) pour calculer une première différence entre ladite vitesse effective et ladite vitesse de consigne ;
- des moyens (16, 17, 18, 19, 20, 21, 22, 23) pour déterminer, pour un paramètre de commande, un terme intermédiaire dépendant de ladite première différence, ledit terme intermédiaire permettant d'obtenir un terme correcteur ;
- des moyens (10) pour faire la somme dudit terme correcteur et d'un terme d'équilibre qui engendre un régime d'équilibre du moteur (2) en l'absence de perturbations de manière à obtenir une valeur de commande ; et
- des moyens (4) pour appliquer la valeur de commande ainsi obtenue audit moteur (2),

**caractérisé en ce qu'**il comporte de plus :

- des moyens (25) pour calculer une seconde différence entre ledit terme intermédiaire et un terme correcteur enregistré précédemment ;
- des moyens (26) pour comparer cette seconde différence à une valeur de seuil prédéterminée ;
- des moyens (27) pour sélectionner comme terme correcteur :

. ledit terme intermédiaire, si ladite seconde différence est supérieure à ladite valeur de seuil ; et
. ledit terme correcteur enregistré précédemment, si ladite seconde différence est inférieure ou égale à ladite valeur de seuil ; et

- des moyens (29) pour enregistrer le terme correcteur sélectionné:

**Patentansprüche**

1. Verfahren zur automatischen Steuerung des Schubes wenigstens einer Antriebseinrichtung (2) eines Flugzeugs während einer horizontalen Flugphase bei stabiler Geschwindigkeit, gemäß der Schub der Antriebseinrichtung (2) gesteuert wird, indem dieser ein Steuerwert zugewiesen wird, der dem Wert eine vorbestimmten und für die Drehzahl der Antriebseinrichtung (2) repräsentativen Steuerparameters entspricht, und gemäß welcher automatisch und wiederholt der folgende Schrittfolge durchgeführt wird:

a) Messen einer Istgeschwindigkeit entsprechend dem Istwert der Geschwindigkeit des Flugzeugs;
b) Bestimmen einer Sollgeschwindigkeit entsprechend der Geschwindigkeit des Flugzeugs, die repräsentativ für den aus der voraus gegangenen Schrittfolge erhaltenen Steuerwert ist;
c) Berechnen einer ersten Differenz zwischen der Istgeschwindigkeit und der Sollgeschwindigkeit;
d) Bestimmen eines von der ersten Differenz abhängigen Zwischengliedes für den Steuerparameter, wobei das Zwischenglied ermöglicht, ein Korrekturglied zu erhalten;
e) Summieren des Korrekturgliedes und eines Gleichgewichtsgliedes, was einen Gleichgewichtszustand der Antriebseinrichtung (2) bei nicht vorhandenen Störungen erzeugt, um den Steuerwert zu erhalten; und
f) Zuweisen des so erhaltenen Steuerwertes an die Antriebseinrichtung,

**dadurch gekennzeichnet, dass** am Schritt d):

- eine zweite Differenz zwischen dem Zwischenglied der gegenwärtigen Schrittfolge und dem Korrekturglied der voraus gegangenen Schrittfolge berechnet wird;
- diese zweite Differenz mit einem vorbestimmten Schwellenwert verglichen wird; und
- als Korrekturglied für die gegenwärtige Schrittfolge, die insbesondere am Schritt e) verwendet wird, ausgewählt wird:

• das Zwischenglied der gegenwärtigen Schrittfolge, wenn die zweite Differenz größer als der Schwellenwert ist; und
• das Korrekturglied der voraus gegangenen Schrittfolge, wenn die zweite Differenz kleiner oder gleich dem Schwellenwert ist.

2. Verfahren nach Anspruch 1,
**dadurch gekennzeichnet, dass** das gewählte Korrekturglied vor seiner Verwendung am Schritt e) gefiltert wird.

3. Verfahren nach einem Ansprüche 1 und 2,
**dadurch gekennzeichnet, dass** der vorbestimmte Steuerparameter die Drehzahl der Antriebseinrichtung (2) ist.

4. Verfahren nach Anspruch 3,
**dadurch gekennzeichnet, dass** der Schwellenwert 0,5% des Sollwertes der Drehzahl der Antriebseinrichtung (2) beträgt.

**5.** Verfahren nach einem der Ansprüche 3 und 4,
**dadurch gekennzeichnet, dass** am Schritt d) das Zwischenglied bestimmt wird durch Summierung:

- eines ersten Gliedes, das proportional zu der ersten Differenz ist; und
- eines zweiten Gliedes, das:

• einer Integration der ersten Differenz entspricht, wenn die erste Differenz größer als ein vorbestimmter werden ist, und wenn die Istgeschwindigkeit nicht von der Sollgeschwindigkeit abweicht; und
• gleich Null ist, wenn wenigstens eine voraus gegangenen Bedingungen nicht verifiziert wird.

**6.** Verfahren nach einem der Ansprüche 1 und 2,
**dadurch gekennzeichnet, dass** der vorbestimmte Steuerparameter das Motor-Druckverhältnis der Antriebseinrichtung (2) ist.

**7.** Methode zur Steuerung des Schubs wenigstens einer Antriebseinrichtung (2) eines Flugzeugs während einer horizontalen Flugphase bei stabiler Geschwindigkeit, wobei die Methode wenigstens ein erstes Steuerverfahren für den Schub umfasst,
**dadurch gekennzeichnet, dass** dieses femer ein zweites Steuerverfahren für den Schub umfasst, dass das zweite Steuerverfahren dem unter einem der Ansprüche 1 bis 6 angegebenen Verfahren entspricht, dass die Resultate des ersten Steuerverfahrens bei normaler Funktionsweise berücksichtigt werden und dass automatisch auf das zweite Steuerverfahren umgeschaltet wird, um die Resultate dieses zu berücksichtigen, wenn wenigstens eine einer Mehrzahl von vorbestimmten Bedingungen verifiziert wird.

**8.** Methode nach Anspruch 7,
**dadurch gekennzeichnet, dass** die vorbestimmten Bedingungen wenigstens die folgenden Bedingungen umfassen:

- die Istgeschwindigkeit ist stabil und auf einem vorbestimmten Wert nahe oder gleich der Istgeschwindigkeit;
- die Bedingungen für die Berechnung des Gleichgewichtsgliedes sind gültig;
- eine Autoschub-Funktion des Flugzeugs ist auf den Betriebsmodus der Beibehaltung der Geschwindigkeit eingestellt; und
- ein Autopilot des Flugzeugs ist im Betriebsmodus der Beibehaltung der Höhe aktiv.

**9.** Vorrichtung zur Steuerung des Schubes wenigstens einer Antriebseinrichtung (2) eines Flugzeugs während einer horizontalen Flugphase bei stabiler Geschwindigkeit, wobei die Vorrichtung (1) umfasst:

- eine Einrichtung (15) zum Messen einer Istgeschwindigkeit entsprechend dem Istwert der Geschwindigkeit des Flugzeugs;
- eine Einrichtung (14) zum Bestimmen einer Sollgeschwindigkeit entsprechend der Geschwindigkeit des Flugzeugs, die für einen Steuerwert repräsentativ ist;
- eine Einrichtung (13) zum Berechnen einer ersten Differenz zwischen der Istgeschwindigkeit und der Sollgeschwindigkeit;
- Einrichtungen (16, 17, 18, 19, 20, 21, 22, 23) zum Bestimmen eines von der ersten Differenz abhängigen Zwischengliedes für einen Steuerparameter, wobei das Zwischenglied ermöglicht, ein Korrekturglied zu erhalten;
- eine Einrichtung (10) zum Summieren des Korrekturgliedes und eines Gleichgewichtsgliedes, die einen Gleichgewichtszustand der Antriebseinrichtung (2) bei Nichtvorhandensein von Störungen erzeugt, um einen Steuerwert zu erhalten; und
- eine Einrichtung (4), um den so erhaltenen Steuerwert an der Antriebseinrichtung (2) zuzuweisen,

**dadurch gekennzeichnet, dass** diese femer umfasst:

- eine Einrichtung (25) zum Berechnen einer zweiten Differenz zwischen dem Zwischenglied und einem vorher registrierten Korrekturglied;
- eine Einrichtung (26) zum Vergleichen dieser zweiten Differenz mit einem vorbestimmten Schwellenwert;
- eine Einrichtung (27) zum Auswählen als Korrekturglied:

• das Zwischenglied, wenn die zweite Differenz größer als der Schwellenwert ist; und

• das vorher registrierte Korrekturglied, wenn die zweite Differenz kleiner oder gleich dem Schwellenwert ist; und

- eine Einrichtung (29) zum Registrieren des gewählten Korrekturgliedes.

**Claims**

1. A process of automatic control of the thrust of at least one engine (2) of an aircraft during a phase of horizontal flight at stabilized speed, according to which process the thrust of the engine (2) is controlled by applying a control value thereto which corresponds to the value of a predetermined control parameter representative of the rating of said engine (2), and according to which the following set of steps is carried out automatically and repeatedly:

   a) an actual speed corresponding to the actual value of the speed of the aircraft is measured;
   b) a preset speed corresponding to the speed of the aircraft, representative of the control value obtained from the previous set of steps, is determined;
   c) a first difference between said actual speed and said preset speed is calculated;
   d) an intermediate term dependent on said first difference is determined for said control parameter, said intermediate term making it possible to obtain a corrector term;
   e) the sum is computed of said corrector term and of an equilibrium term which produces an equilibrium rating of the engine (2) in the absence of disturbances so as to obtain said control value; and
   f) the control value thus obtained is applied to said engine,

   **characterized in that** in step d):

   - a second difference between said intermediate term of the present set of steps and the corrector term of the previous set of steps is calculated;
   - this second difference is compared with a predetermined threshold value; and
   - one selects as corrector term for the present set of steps, that is used in particular in step e) :

      . said intermediate term of the present set of steps, if said second difference is greater than said threshold value; and
      . said corrector term of the previous set of steps, if said second difference is less than or equal to said threshold value.

2. The process as claimed in claim 1,
   **characterized in that** said selected corrector term is filtered before using it in step e).

3. The process as claimed in either of claims 1 and 2,
   **characterized in that** said predetermined control parameter is the speed of rotation of the engine (2).

4. The process as claimed in claim 3,
   **characterized in that** said threshold value is equal to 0.5% of the preset value of the speed of rotation of the engine (2).

5. The process as claimed in either of claims 3 and 4,
   **characterized in that** in step d), said intermediate term is determined by computing the sum:

   - of a first term which is proportional to said first difference; and
   - of a second term which:

      . corresponds to the integration of said first difference, if said first difference is greater than a predetermined value and if said actual speed does not diverge from said preset speed; and
      . is equal to zero, if at least one of the above conditions is not satisfied.

6. The process as claimed in either of claims 1 and 2,
   **characterized in that** said predetermined control parameter is the engine pressure ratio of said engine (2).

7. Method of control of the thrust of at least one engine (2) of an aircraft during a phase of horizontal flight at stabilized speed, said method comprising at least one first process of control of thrust,
**characterized in that** it moreover comprises a second process of control of thrust, **in that** said second control process corresponds to the process specified under any one of claims 1 to 6, **in that** account is taken of the results of said first control process under normal operation, and **in that** one automatically switches into said second control process so as to take account of the results of the latter when at least one of a plurality of predetermined conditions is satisfied.

8. The method as claimed in claim 7,
**characterized in that** said predetermined conditions comprise at least the following conditions:

- the actual speed is stabilized, being to within a predetermined value, equal to the preset speed;
- the conditions of calculation of said equilibrium term are valid;
- an autothrust function of the aircraft is engaged in speed holding mode; and
- an automatic pilot of the aircraft is active in altitude holding mode.

9. A device for controlling the thrust of at least one engine (2) of an aircraft during a phase of horizontal flight at stabilized speed, said device (1) comprising:

- means (15) for measuring an actual speed corresponding to the actual value of the speed of the aircraft;
- means (14) for determining a preset speed corresponding to the aircraft's speed representative of a control value;
- means (13) for calculating a first difference between said actual speed and said preset speed;
- means (16, 17, 18, 19, 20, 21, 22, 23) for determining, for a control parameter, an intermediate term dependent on said first difference, said intermediate term making it possible to obtain a corrector term;
- means (10) for computing the sum of said corrector term and of an equilibrium term which produces an equilibrium rating of the engine (2) in the absence of disturbances so as to obtain a control value; and
- means (4) for applying the control value thus obtained to said engine (2),

**characterized in that** it moreover comprises:

- means (25) for calculating a second difference between said intermediate term and a previously recorded corrector term;
- means (26) for comparing this second difference with a predetermined threshold value;
- means (27) for selecting as corrector term:

    .said intermediate term, if said second difference is greater than said threshold value; and
    .said previously recorded corrector term, if said second difference is less than or equal to said threshold value; and

- means (29) for recording the selected corrector term.

1

3A, 3B       5A, 5B       4       6       2

## Fig. 1

3B

7       5A

30       32       31

1       34       5B

33

## Fig. 3

Fig. 2